**Europäisches Patentamt**

**European Patent Office**

**Office européen des brevets**

(19)

(11) Numéro de publication: **0 208 596**
**B1**

(12) # FASCICULE DE BREVET EUROPEEN

(45) Date de publication du fascicule du brevet:
**22.08.90**

(21) Numéro de dépôt: **86401386.7**

(22) Date de dépôt: **24.06.86**

(51) Int. Cl.⁵: **B63B 21/56,** F16F 1/46,
F16F 7/00, H01B 7/12, D07B 1/00

(54) Amortisseur de vibrations pour corps remorqué.

(30) Priorité: **28.06.85 FR 8509892**

(43) Date de publication de la demande:
**14.01.87 Bulletin 87/3**

(45) Mention de la délivrance du brevet:
**22.08.90 Bulletin 90/34**

(84) Etats contractants désignés:
**DE GB NL SE**

(56) Documents cités:
CH-A- 320 050
DE-A- 1 623 488
DE-A- 3 044 709
DE-C- 675 502
DE-C- 724 359
FR-A- 1 161 994
FR-A- 2 050 020
FR-A- 2 310 498
GB-A- 13 310
US-A- 2 878 013
US-A- 3 231 255
US-A- 3 371 311
US-A- 3 696 325
US-A- 4 090 168
US-A- 4 116 153

(73) Titulaire: THOMSON-CSF, 51, Esplanade du Général de
Gaulle, F-92800 Puteaux(FR)

(72) Inventeur: **Reynier, René, THOMSON-CSF**
**SCPI 19, avenue de Messine, F-75008 Paris(FR)**
Inventeur: **Malcor, Jean-Georges, THOMSON-CSF**
**SCPI 19, avenue de Messine, F-75008 Paris(FR)**
Inventeur: **Moresco, Gilles, THOMSON-CSF**
**SCPI 19, avenue de Messine, F-75008 Paris(FR)**
Inventeur: **Ramoger, François, THOMSON-CSF**
**SCPI 19, avenue de Messine, F-75008 Paris(FR)**

(74) Mandataire: **Desperrier, Jean-Louis et al,**
**THOMSON-CSF SCPI, F-92045 PARIS LA DEFENSE**
**CEDEX 67(FR)**

## Description

L'invention concerne un amortisseur de vibrations pour corps remorqué et plus particulièrement une section amortissante de corps remorqué servant aussi d'attelage. Plus particulièrement, cette section constitue le tronçon de tête d'une antenne linéaire sous-marine remorquée par un bateau, appelée "flûte".

Ces flûtes sont généralement destinées à contenir des instruments de détection et de mesure et doivent être à l'abri des trépidations du bateau remorqueur ainsi que des remous créés dans son sillage.

Il s'agit alors de découpler mécaniquement un corps remorqué du câble (ou autre dispositif) tracteur pour éviter que toute vibration du bateau se transmette au corps remorqué porteur d'instruments. Ces vibrations peuvent avoir plusieurs origines telles que le mouvement du véhicule remorqueur ou la turbulence de la couche limite le long du câble.

Dans le cas où le corps remorqué est une flûte des contraintes spécifiques apparaissent à savoir:

– Etanchéité et immergeabilité
– Indépendance à la pression statique
– Densité contrôlable
– Enroulement sous traction
– Environnement sévère (marin, ozone, UV, ...)
– Passage de câbles de connexions reliant les instruments contenus dans la flûte au bateau remorqueur.

Le document FR-A 2 050 020 décrit un câble en matériau synthétique entouré par un fourreau en fils métalliques. Un amortissement est obtenu par modification de la longueur du câble. Par contre, le fourreau en fils métalliques permet une résistance à la traction élevée.

Le document FR-A 1 161 994 décrit un élément de traction élastique comportant deux bandes de toile permettant de délimiter des canaux transversaux en réalisant soit des coutures, soit des agrafages des deux bandes selon un sens transversal aux bandes. Des éléments cylindriques élastiques sont placés dans ces canaux.

Il est connu d'intercaler entre le corps tracté et le véhicule tracteur un tronçon en matériau à pertes contrôlées. Ce matériau possède un angle de perte dont la valeur est telle que l'on obtienne un amortissement correct des vibrations.

On rappelle qu'un matériau à pertes est un matériau, qui subissant une contrainte ayant tendance à le déformer, accuse un certain retard de déformation par rapport à l'instant d'application de la contrainte. De là même, après suppression de la contrainte, il reprend sa forme d'origine au terme d'un certain retard.

L'angle de perte d'un matériau à pertes caractérise ce retard existant entre l'application ou la suppression de la contrainte et la déformation du matériau.

Ce matériau n'étant pas, par définition, parfaitement élastique, un tel amortisseur soumis à des conditions d'utilisation et de stockage sévères, comme c'est le cas pour les flûtes, n'a pas une bonne durée de vie.

Il est également connu d'utiliser des dispositifs de type masse-ressort ou bien des dispositifs de type dashpot (piston-diagramme). Cependant ces dispositifs ne conviennent pas à cause de la contrainte de l'enroulement sous traction.

L'invention prévoit donc d'utiliser un matériau à pertes. Plus spécialement l'amortisseur de vibrations de l'invention sera conçu pour que les forces de traction donnent lieu à des pertes dans un matériau "à pertes" de façon que ce matériau travaille dans de bonnes conditions. Le matériau à pertes utilisé pourra être aussi bien, selon l'exemple de réalisation de l'invention, un matériau solide qu'un matériau liquide visqueux.

L'invention concerne donc un amortisseur de vibrations pour corps remorqué comprenant un élément de traction disposé selon une direction déterminée, comportant une première extrémité sur laquelle s'exerce un effort de traction dirigé selon ladite direction et une deuxième extrémité à laquelle est relié ledit corps remorqué, ainsi qu'au moins une pièce en matériau à pertes plaquée contre l'élément de traction de telle façon que les vibrations exercées selon ladite direction provoque des déformations de la pièce en matériau à pertes, caractérisé en ce que l'élément de traction comprend un manchon tissé ainsi que des moyens de rétrécissement réalisant sur ce manchon des rétrécissements de façon à réaliser, dans le manchon tissé, des cavités enfermant chacune une pièce en matériau à pertes.

Les différents objets et caractéristiques de l'invention vont maintenant être décrits en se reportant aux figures annexées qui représentent:

– les figures 1 et 2, un exemple de réalisation de l'amortisseur de l'invention comprenant un tissage croisé;
– les figures 3 à 5, un exemple de réalisation de l'amortisseur de l'invention comprenant des anneaux de serrage;
– la figure 6, un élément tissé utilisable dans les exemples de réalisation des figures 3 à 5;
– la figure 7, un exemple de réalisation de l'amortisseur de l'invention dans lequel la pièce à matériau à pertes est une corde enroulée en spirale;
– la figure 8, un exemple de déformation d'une spire de la corde de la figure 7;
– les figures 9 et 10, un exemple de réalisation de l'amortisseur de l'invention dans lequel la pièce à matériau à pertes est une corde ou des portions de cordes disposées à plat;
– les figures 11 à 14, un exemple de réalisation de l'amortisseur de l'invention, dans lequel les pièces de matériau à pertes sont des portions de cordes disposées parallèlement à l'axe de l'amortisseur, suivant la direction des forces de traction auquel est soumis l'amortisseur;
– la figure 15, un exemple de réalisation de l'amortisseur de l'invention, formé d'un seule corde.

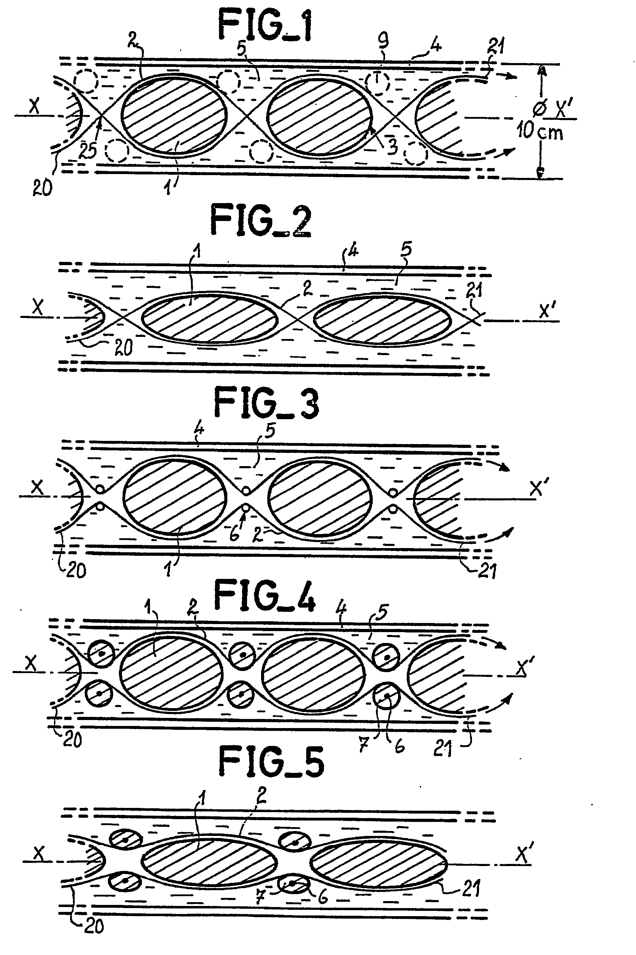

En se reportant à la figure 1, on va tout d'abord décrire un premier exemple de réalisation d'un amortisseur de vibrations selon l'invention.

Le tronçon amortisseur est constitué d'une gaine élastique 4 de protection mécanique et climatique dans laquelle est enfermée une structure formée de pièces en matériau à pertes 1 de volumes identiques mises en série. Chaque pièce est enserrée dans des éléments de traction 2 se présentant sous la forme d'une structure textile en matériau résistant à la traction et qui effectue la reprise d'efforts.

Les éléments de traction 2 sont, par exemple, les fibres d'un manchon tissé. Le tissage est croisé en 25 à intervalles réguliers sur la longueur du manchon et déterminant dans le manchon un certain nombre d'espaces ou cavités dans lesquels sont emprisonnées les pièces en matériau à pertes 1.

Comme représenté sur la figure 1, chaque pièce 1, par exemple de forme ellipsoïdale, est prise en tenaille par la structure textile.

Lorsqu'on exerce des efforts de traction aux extrémités 20 et 21 des fibres 2, on tend à rendre ces fibres rectilignes et à déformer comme cela est représenté en figure 2, les pièces en matériau à pertes 1.

Du fait que les pièces 1 sont maintenues serrées par le tissage 2, l'écrasement et le relâchement de ces pièces produisent l'amortissement désiré.

Dans ces conditions, lorsque le corps remorqué se trouve attaché du côté de l'extrémité 20 des fibres 2 et le bateau remorqueur attaché du côté de l'extrémité 21 ou inversement, les pièces 1 vont être comprimées par les fibres 2 et se déformer sous l'effet des vibrations comme cela est représenté en figure 2.

L'ensemble ainsi décrit est maintenu dans une gaine 4. A titre d'exemple, dans le cas d'application d'une flûte sous-marine, une telle gaine 4, et donc sensiblement chaque pièce 1, aura un diamètre d'environ 10 centimètres. Pour obtenir un bon amortissement le matériau à pertes utilisé pour les pièces 2 présentera un angle de pertes $\delta$ tel que :
$$0,2 < \text{tg } \delta < 0,5$$
Par exemple, le matériau à pertes est un produit à base de Polybutadiène, ou d'Epichlorhydrine, ou de Polynorbornène, en encore de Butyl et Halobutyl.

La structure textile utilisée est par exemple en fibres Keylar ou en fibres métalliques.

Pour compléter le dispositif de la figure 1, les pièces 1 et les fibres 2 sont noyées dans un liquide 5 dont est remplie la gaine 4. La densité de ce liquide est prévue de telle façon, qu'en utilisation dans l'eau pour le remorquage d'une flûte, l'amortisseur de vibrations soit soustrait aux pressions hydrostatiques.

Comme représenté en figure 1, il est également prévu dans le cas où le corps remorqué doit échanger des informations avec le bateau remorqueur ou recevoir une alimentation électrique de celui-ci, une ou plusieurs connexions circulant dans la gaine 4. Sur la figure 1, on a donc représenté en pointillés les emplacements de passage d'un tel câble.

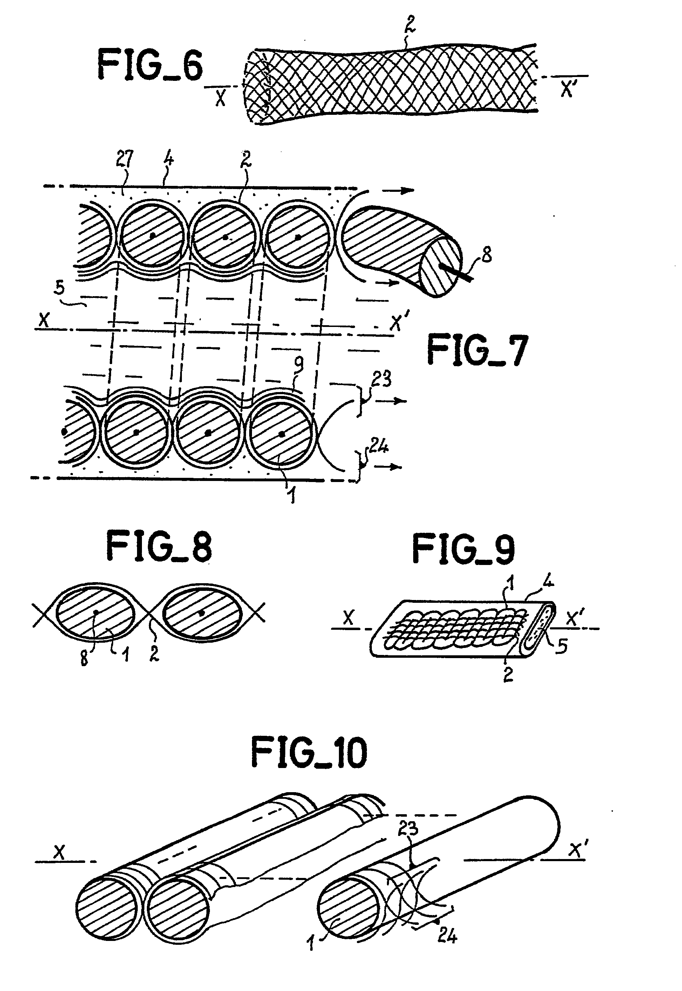

Suivant une variante de réalisation de l'invention, la structure textile 2 forme un tube sensiblement cylindrique comme représenté en figure 6.

Pour réaliser un amortisseur analogue à celui de la figure 1, on prévoit des bagues de serrage 6 placées, de chaque côté des pièces 1 autour de la structure textile 2. On obtient un amortisseur tel que représenté en figure 3.

Les bagues de serrage peuvent comporter, comme représenté en figure 4, un anneau rigide 6, en métal par exemple, enrobé d'un tore 7 en matériau à pertes analogue au matériau des pièces 1. Dans ces conditions les bagues contribuent à l'effet d'amortissement de l'amortisseur. Les variations de la traction, sous l'effet des vibrations, s'exerçant aux extrémités 20, 21 des fibres ont alors pour effet d'écraser les pièces en matériau à pertes 1 ainsi que les tores 7 comme cela est représenté en figure 5.

Selon un autre exemple de réalisation de l'invention, la structure amortissante est intégrée à la gaine. Comme représenté sur la figure 7, le tronçon amortisseur est constitué d'une corde en matériau à pertes 1 formant une trame circonférentielle à spires jointives. Ces spires sont enserrées et tenues entre elles par une structure textile 2 formant la chaine et qui effectue la reprise d'efforts, donc résistante à la traction. L'allongement est limité par l'écrasement de la corde et ceci localement. La dilatation radiale est limitée par un fil 8 placé à l'intérieur de la corde. Il y a une gaine 4 tenant lieu de revêtement extérieur de protection mécanique et climatique et une membrane intérieure 9 étanche au liquide de flottabilité 5 dont le rôle a été décrit précédemment en relation avec la figure 1. L'écrasement et le relâchement de la corde sous l'effet des fibres de la structure textile 2 produisent l'amortissement. Les matériaux sont par exemple ceux cités dans la première réalisation.

Sur la figure 8, on a représenté l'effet de déformation du matériau à pertes 1.

Suivant une variante de réalisation non représentée, le tronçon amortisseur de la figure 7 comporte une corde à matériau à pertes 1 et une corde en matériau élastique. Les deux cordes sont enroulées en spirales entrelacées à spires jointives.

La corde 1 peut également être montée à plat, comme cela est représenté en figure 9, à l'intérieur d'une gaine 4 d'allure générale plate au lieu de cylindrique. Le tronçon se présente sous forme d'un ruban placé à l'intérieur d'une gaine de section ovale et remplie d'un liquide d'équilibrage comme représenté figure 9.

La partie active de ce tronçon amortisseur a été représentée en détail sur la figure 10. Les différentes portions de la corde 1 sont maintenues en place et resserrées par deux réseaux de fibres 23 et 24 entrelacées.

La réalisation d'un tel amortisseur peut se faire à l'aide de portions de cordes au lieu d'une corde unique. Il est possible de prévoir en variante comme précédemment des portions de corde 1 en matériau à pertes et, intercalés entre eux des éléments en matériau élastique, de préférence de même dimensions que les portions de corde.

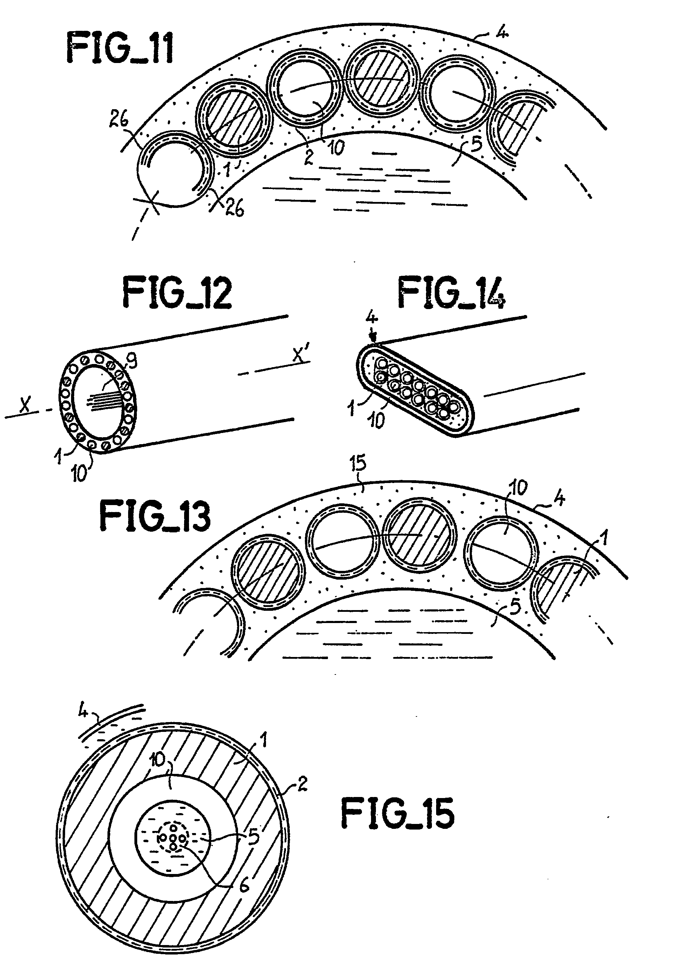

Selon une autre variante de réalisation le tronçon amortisseur est constitué de cordes jointives longitudinales formant la chaine de la gaine. Comme représenté sur les figures 10 et 11, on alterne par exemple une corde 10 constituée d'un matériau élastique avec une corde 1 constituée d'un matériau à pertes. Chaque corde est entourée d'une armature textile 2 qui limite l'allongement à 10-20% de l'allongement total. Cette limitation se fait localement et elle est répartie sur toute la longueur. Cette armature textile effectue la reprise d'efforts et elle est tressée en diagonale pour obtenir une compression sans étirement.

Les cordes sont maintenues entre elles par des fils de trame 26 disposés perpendiculairement à l'axe du tronçon et qui limitent la dilatation radiale de 5 à 10%.

Il y a un revêtement extérieur 4 de protection mécanique et climatique pouvant noyer les fils de trame et une membrane intérieure 14 étanche au liquide de remplissage 5 qui est, soit liée aux fils de trame, soit indépendante, maintenue plaquée par la pression interne du liquide de remplissage 5.

L'effort de traction est appliqué au tronçon selon l'axe du tronçon par les extrémités des armatures textiles 2 dépassant aux extrémités du tronçon. Sous l'effet des vibrations, l'armature textile comprime les cordes en matériau à pertes qui travaillent en compression et produisent ainsi l'amortissement. Les fils de trame qui prennent les cordes en tenaille jouent également un rôle dans l'amortissement.

Suivant une variante, les fils de trame sont supprimés et les cordes sont noyées dans un matériau homogène 15 tenant lieu également d'enveloppe de protection mécanique et climatique. On obtient ainsi une réalisation du type représenté en figures 12 et 13.

Suivant une autre forme de réalisation, les cordes sont mises "à plat" comme représenté sur la figure 14. Le tronçon se présente sous forme d'un ruban placé à l'intérieur d'une gaine de section ovale remplie par le liquide d'équilibrage.

Une autre forme de réalisation est représentée en figure 15.

Elle consiste à réaliser le tronçon amortisseur avec une seule corde de diamètre plus important. Elle est composée de deux manchons coaxiaux, un manchon central 10 en matériau élastique et un manchon extérieur 1 en matériau à pertes. Le manchon extérieur 1 est recouvert par une armature textile 2 formant tresse qui effectue la reprise d'efforts et se trouve ancrée à deux jonctions d'extrémités du tronçon. L'évidement central 6 sert au passage des connexions et est rempli du liquide de flottabilité 5. Cet évidement central permet la compression radiale des matériaux par la tresse pour provoquer l'amortissement. Une gaine de protection élastique peut être prévue 4.

·Revendications

1. Amortisseur de vibrations pour corps remorqué comprenant un élément de traction (2) disposé selon une direction (XX') déterminée, comportant une première extrémité (20) sur laquelle s'exerce un effort de traction dirigé selon ladite direction (XX') et une deuxième extrémité (21) à laquelle est relié ledit corps remorqué, ainsi qu'au moins une pièce en matériau à pertes (1) plaquée contre l'élément de traction (2) de telle façon que les vibrations exercées selon ladite direction (XX') provoquent des déformations de la pièce en matériau à pertes (1), caractérisé en ce que l'élément de traction (2) comprend un manchon tissé ainsi que des moyens de rétrécissement réalisant sur ce manchon des rétrécissements de façon à réaliser, dans le manchon tissé, des cavités enfermant chacune une pièce en matériau à pertes.

2. Amortisseur de vibrations selon la revendication 1, caractérisé en ce que l'élément de traction (2) comprend un manchon tissé dont le tissage est croisé à intervalles réguliers délimitant dans le manchon des cavités fermées de dimensions intérieures déterminées pouvant contenir chacune une pièce en matériau à pertes (1) de dimensions sensiblement égales aux dimensions intérieures des cavités.

3. Amortisseur de vibration selon la revendication 2, caractérisé en ce qu'il comporte des anneaux de serrage (6) disposés à intervalles réguliers selon la longueur du manchon (2), ces anneaux de serrage (6) formant des rétrécissements dans le manchon et délimitant dans le manchon des cavités (23) pouvant contenir chacune une pièce en matériau à pertes (1).

4. Amortisseur de vibrations selon la revendication 3, caractérisé en ce que chaque anneau de serrage comporte un anneau rigide (6) enrobé d'un tore (7) en matériau à pertes.

5. Amortisseur de vibrations selon la revendication 1, caractérisé en ce que le manchon est de forme générale cylindrique et qu'il est entouré d'une gaine contenant un fluide d'équilibrage.

6. Amortisseur de vibrations selon la revendication 5, caractérisé en ce qu'il comporte le long de la gaine, à l'intérieur de celle-ci, des zones de passage de connexions pour l'alimentation du corps remorqué et la transmission d'informations.

7. Amortisseur de vibrations selon la revendication 1, caractérisé en ce que la pièce en matériau à pertes (1) est une corde bobinée à spires quasi-jointives maintenues par l'élément de traction (2) comportant une première pluralité de fibres (23) entrelacées entre les différentes spires successives et exerçant sur chaque spire, sous l'effet des vibrations, un effort radial d'un premier sens déterminé ainsi qu'une deuxième pluralité de fibres (24) également entrelacées entre les différentes spires successives de telle façon qu'elles exercent sur chaque spire, sous l'effet dudit effort de traction, un effort radial d'un deuxième sens inverse au premier sens de façon que les deux pluralités de fibres aient tendance à comprimer les spires de la corde en matériau à pertes (1).

8. Amortisseur de vibrations selon la revendication 1, caractérisé en ce que la pièce en matériau à pertes (1) est de forme allongée rectiligne, un nombre déterminé de pièces en matériau à pertes (1) étant disposées parallèlement, l'élément de traction (2) comportant une première pluralité de fibres (23) entrelacées entre les différentes pièces à matériau à pertes successives et exerçant sur chaque dite pièce, sous l'effet dudit effort de traction, un effort d'un premier sens déterminé ainsi qu'une deuxième pluralité de fibres (24) également entrelacées entre les différentes pièces (1) successives de telle façon qu'elles exercent sur chaque pièce, sous l'effet dudit effort de traction, un effort d'un deuxième sens inverse au premier sens de façon que les deux pluralités de fibres aient tendande à comprimer les pièces en matériau à pertes (1).

9. Amortisseur de vibrations selon la revendication 7, caractérisé en ce que la pièce en matériau à pertes (1) de forme spirale comporte un noyau en matériau rigide limitant son allongement.

10. Amortisseur de vibrations selon l'une quelconque des revendications 7 ou 8, caractérisé en ce qu'il comporte une gaine (4) contenant un liquide (5) et enrobant l'ensemble pièce en matériau à pertes (1) et l'élément de traction (2).

11. Amortisseur de vibrations selon la revendication 7, caractérisé en ce qu'il comporte une pièce en matériau élastique (10) identique à la pièce en matériau à pertes (1) et bobinée avec la pièce en matériau à pertes (1) avec les spires des deux pièces intercalées les unes dans les autres.

12. Amortisseur de vibrations selon la revendication 9, caractérisé en ce qu'il comporte des pièces en matériau élastique (10) similaires aux pièces en matériau à pertes (1) intercalées entre lesdites pièces en matériau à pertes.

## Claims

1. A vibration damper for a towed body comprising a traction element (2) disposed along a predetermined direction (XX'), including a first end (20) subjected to a traction force along said direction (XX'), and a second end (21), coupled to said towed body, as well as at least one member (1) made of loss material and applied against the traction element (2), such that the vibrations exerted in said direction (XX') cause deformations of the loss material member (1), characterized in that the traction element (2) comprises a woven sheath as well as contraction means adapted to bring contraction about said sheath, so as to form cavities inside the woven sheath, each of which enclosing a loss material member.

2. A vibration damper according to claim 1, characterized in that the traction element (2) comprises a woven sheath, whose web is crossed at regular intervals and delimits closed cavities inside the sheath having predetermined dimensions, which cavities are adapted to contain each a loss material member (1) that has dimensions substantially equal to the inner dimensions of the cavities.

3. A vibration damper according to claim 2, characterized in that it comprises pinching rings (6) disposed at regular intervals along the length of the sheath (2), said pinching rings (6) forming constrictions in the sheath and defining cavities (23) inside the sheath capable of containing each a loss material member (1).

4. A vibration damper according to claim 3, characterized in that each pinching ring comprises a rigid ring (6) clad with a torus (7) of loss material.

5. A vibration damper according to claim 1, characterized in that the sheath has substantially a cylindrical shape and that it is surrounded by an envelope containing an equilibration fluid.

6. A vibration damper according to claim 5, characterized in that it comprises passage zones disposed along the sheath and inside of it, for receiving connections adapted to supply power to the towed body and to transmit information.

7. A vibration damper according to claim 1, characterized in that the loss material member (1) is a cord wound in quasi-contiguous windings which are kept in place by the traction element (2) comprising a first plurality of fibers (23) interlaced with the different successive windings and exerting onto each winding, under the impact of the vibrations, a radial force pointing in a first predetermined direction, as well as a second plurality of fibers (24) also interlaced with the different successive windings, such that these fibers exert onto each winding, under the impact of the vibrations, a radial force pointing in a second direction opposite to the first direction, in such a way that the two pluralities of fibers tend to compress the windings of the loss material cord (1).

8. A vibration damper according to claim 1, characterized in that the loss material member (1) has an elongated straight shape, with a predetermined number of loss material members (1) being disposed parallely, the traction element (2) comprising a first plurality of fibers (23) interlaced with the different successive loss material members and exerting onto each member, under the impact of said traction force, a force pointing in a first predetermined direction, as well as a second plurality of fibers (24) also interlaced with the different successive members (1), such that these fibers exert unto each member, under the impact of said traction force, a force pointing in a second direction opposite to the first direction, in such a way that the two pluralities of fibers tend to compress the loss material members (1).

9. A vibration damper according to claim 7, characterized in that the loss material member (1) of spiral shape comprises a core of rigid material adapted to restrict its elongation.

10. A vibration damper according to anyone of the claims 7 or 8, characterized in that it comprises an envelope (4) which contains a liquid (5) and clads the entire mounting of the loss material member (1) and the traction element (2).

11. A vibration damper according to claim 7, characterized in that it comprises a member (10) made of elastic material identical to member (1) made of loss material and wound together with the loss material member (1), in such a way that the windings of the two components are interlaced with one another.

12. A vibration damper according to claim 9, characterized in that it comprises members (10) made of elastic material, similar to the loss material members (1), and interlaced with said loss material members.

## Patentansprüche

1. Schwingungsdämpfer für einen Schleppkörper, mit einem in einer bestimmten Richtung (XX') angeordneten Zugelement (2), an dessen erstem Ende (20) eine in die genannte Richtung (XX') weisende Zugkraft angreift und mit dessen zweitem Ende (21) der Schleppkörper verbunden wird, und mit mindestens einem Glied (1) aus Verlustmaterial, das gegen das Zugelement (2) anliegt, derart, daß die in der genannten Richtung (XX') verlaufenden Schwingungen Verformungen des Verlustmaterials (1) verursachen, dadurch gekennzeichnet, daß das Zugelement (2) eine gewebte Hülse sowie Kontraktionsmittel aufweist, die Zusammenziehungen der Hülse bewirken, derart, daß in der gewebten Hülse Hohlräume gebildet werden, welche jeweils ein Verlustmaterialglied umschließen.

2. Schwingungsdämpfer nach Anspruch 1, dadurch gekennzeichnet, daß das Zugelement (2) eine gewebte Hülse aufweist, dessen Gewebestruktur in regelmäßigen Abständen gekreuzt ist, wodurch in der Hülse geschlossene Hohlräume mit bestimmten Innenabmessungen begrenzt werden, die je ein Verlustmaterialglied (1) mit im wesentlichen den gleichen Abmessungen wie den Innenabmessungen der Hohlräume enthalten können.

3. Schwingungsdämpfer nach Anspruch 2, dadurch gekennzeichnet, daß er in regelmäßigen Abständen entlang der Hülse (2) angeordnete Spannringe (6) aufweist, die Einschnürungen der Hülse erzeugen und in der Hülse Hohlräume (23) begrenzen, welche je ein Verlustmaterialglied enthalten können.

4. Schwingungsdämpfer nach Anspruch 3, dadurch gekennzeichnet, daß jeder Spannring einen steifen Ring (6) aufweist, der mit einem Torus (7) aus Verlustmaterial umkleidet ist.

5. Schwingungsdämpfer nach Anspruch 1, dadurch gekennzeichnet, daß die Hülse allgemein zylindrische Form besitzt und von einer Hülle umgeben ist, die ein Ausgleichsfluid enthält.

6. Schwingungsdämpfer nach Anspruch 5, dadurch gekennzeichnet, daß er entlang der Hülle und in deren Inneren Durchgangszonen für Anschlüsse zur Energieversorgung des Schleppkörpers und zur Übertragung von Informationen aufweist.

7. Schwingungsdämpfer nach Anspruch 1, dadurch gekennzeichnet, daß das Verlustmaterialglied (1) aus einer spiralig aufgewickelten Schnur mit praktisch nebeneinanderliegenden Windungen besteht, welche durch das Zugelement (2) zusammengehalten werden, das seinerseits eine erste Vielzahl von Fasern (23), die zwischen die verschiedenen aufeinanderfolgenden Windungen eingeflochten sind und unter der Einwirkung der Schwingungen auf jede Windung eine Radialkraft in einer ersten gegebenen Richtung ausüben, und eine zweite Vielzahl von Fasern (24) aufweist, die ebenfalls zwischen die verschiedenen aufeinanderfolgenden Windungen eingeflochten sind, derart, daß diese Fasern unter der Einwirkung der Zugkraft auf jede Windung eine Radialkraft in einer zweiten Richtung ausüben, die zur ersten Richtung entgegengesetzt verläuft, so daß die beiden Fasergruppen die Tendenz besitzen, die Windungen der Verlustmaterialschnur (1) zusammenzupressen.

8. Schwingungsdämpfer nach Anspruch 1, dadurch gekennzeichnet, daß das Verlustmaterialglied (1) eine längliche, geradlinige Form besitzt, wobei eine bestimmte Anzahl von Verlustmaterialgliedern (1) parallel zueinander verlaufen, wobei das Zugelement (2) eine erste Vielzahl von Fasern (23), die zwischen die verschiedenen aufeinanderfolgenden Verlustmaterialglieder eingeflochten sind und unter der Einwirkung der Zugkraft auf jedes Glied eine Kraft in einer ersten festgesetzten Richtung ausüben, und eine zweite Vielzahl von Fasern (24) aufweist, die ebenfalls zwischen die verschiedenen aufeinanderfolgenden Glieder (1) eingeflochten sind, derart, daß diese Fasern unter der Einwirkung der Zugkraft auf jedes Glied eine Kraft in einer zweiten zur ersten Richtung entgegengesetzten Richtung ausüben, so daß die beiden Fasergruppen die Tendenz besitzen, die Verlustmaterialglieder (1) zusammenzupressen.

9. Schwingungsdämpfer nach Anspruch 7, dadurch gekennzeichnet, daß das spiralförmige Verlustmaterialglied (1) einen Kern aus steifem Material besitzt, der die Längsdehnung des Gliedes begrenzt.

10. Schwingungsdämpfer nach einem beliebigen Anspruch 7 oder 8, dadurch gekennzeichnet, daß er eine Hülle (4) aufweist, die eine Flüssigkeit (5) enthält und die Gesamtheit aus Verlustmaterialglied (1) und Zugelement (2) umkleidet.

11. Schwingungsdämpfer nach Anspruch 7, dadurch gekennzeichnet, daß er ein Element (10) aus elastischem Material aufweist, das dem Verlustmaterialglied (1) gleicht und das mit dem Verlustmaterialglied (1) aufgewickelt ist, wobei die Windungen der beiden Teile ineinandergeschachtelt sind.

12. Schwingungsdämpfer nach Anspruch 9, dadurch gekennzeichnet, daß er Elemente (10) aus elastischem Material aufweist, die den Verlustmaterialgliedern (1) ähneln und zwischen die Verlustmaterialglieder eingefügt sind.

EP 0 208 596 B1

# FIG_1

# FIG_2

# FIG_3

# FIG_4

# FIG_5

EP 0 208 596 B1

## FIG_6

## FIG_7

## FIG_8

## FIG_9

## FIG_10

FIG_11

26
4
1
26
2
10
5

FIG_12

X
9
X'
1
10

FIG_14

4
1
10

FIG_13

15
10
4
1
5

FIG_15

4
1
10
2
5
6